# FASCICULE DE BREVET EUROPEEN

(11) **EP 1 702 713 B1**
(45) Date de publication et mention de la délivrance du brevet: **08.11.2017**
(21) Numéro de dépôt: 06300235.6
(22) Date de dépôt: 15.03.2006
(51) Int. Cl.: B23Q 11/00, B08B 15/04, B23B 47/34

(54) **PROCÉDÉ DE PERÇAGE PERMETTANT DE COLLECTER LES RÉSIDUS ET DISPOSITIF POUR SA MISE EN OEUVRE**
BOHRVERFAHREN, DAS BOHRRÜCKSTÄNDE AUFFÄNGT UND VORRICHTUNG ZU SEINER DURCHFÜHRUNG
DRILLING PROCESS COLLECTING DRILLING RESIDUE AND DEVICE FOR ITS IMPLEMENTATION

(30) Priorité: 17.03.2005 FR 0550681
(43) Date de publication de la demande: 20.09.2006
(73) Titulaire: Scybl, 44840 Les Sorinieres (FR); HOWA TRAMICO, 27800 Brionne (FR)
(72) Inventeur: Champion, Clotaire, 28100 Dreux (FR); Bleuse, Christophe, 44450 Saint Julien de Concelles (FR)
(74) Mandataire: Aquinov

(56) Documents cités:
- EP-A2- 0 401 520
- GB-A- 2 294 538
- GB-A- 190 228 140
- US-A- 3 589 468
- PATENT ABSTRACTS OF JAPAN vol. 1998, no. 09, 31 juillet 1998 (1998-07-31) -& JP 10 086138 A (SEKISUI HOUSE LTD), 7 avril 1998 (1998-04-07)

## Description

La présente invention se rapporte à un procédé de perçage permettant de collecter les résidus ainsi qu'à un dispositif pour sa mise en oeuvre.

Lors d'un perçage, le retrait de matière produit nécessairement des déchets, des débris, des copeaux ou de la poussière, appelés par la suite résidus, qui sont évacués en dehors du trou et tombent généralement au sol.

Pour collecter les résidus, il existe des dispositifs, tels que décrits par exemple dans la demande WO93/16818, comportant au moins une cloche, susceptible d'être appliquée contre la paroi à percer, délimitant une cavité reliée à un aspirateur. Cette cloche comprend un trou dont le diamètre est adapté à celui du foret utilisé pour le perçage. En utilisant un tel dispositif, il est nécessaire de plaquer la cloche contre la paroi à percer en alignant l'orifice de passage du foret ménagé au niveau de la cloche avec la position théorique du trou. Lors du perçage, les résidus sont cantonnés dans la cavité pour être aspirés.

Un tel dispositif ne donne pas pleinement satisfaction pour les raisons suivantes : En premier lieu, ce dispositif nécessite l'utilisation d'un appareil annexe aspirant l'air et les résidus. Cet appareil relativement coûteux est encombrant et génère des coûts d'entretien.

Par ailleurs, ce dispositif n'est pas simple à utiliser car il est difficile d'aligner correctement l'orifice de passage du foret ménagé au niveau de la cloche avec la position théorique du trou à réaliser.

D'autre part, son efficacité est limitée car il est relativement difficile d'obtenir une étanchéité convenable entre la cloche et la paroi à percer si bien qu'une partie des résidus ne sont pas collectés.

Enfin, dans certains cas, ce dispositif est inutilisable notamment lorsqu'un lubrifiant est utilisé lors du perçage pour notamment évacuer les calories et/ou lubrifier.

Dans le cas de perçage de pièces de tailles réduites, une solution consiste à prévoir un carter pour limiter les projections de résidus, lesdits résidus étant collectés dans des bacs. Selon le document EP 0 401 520 un carter peut être fixé sur la pièce à percer à travers d'un disque adhésif. Pour des machines ou des transformations de pièces de tailles importantes, notamment dans des secteurs d'activités tels que l'aéronautique ou l'aérospatiale, cette solution n'est pas adaptée. Dans ce cas, il n'existe aucun procédé ou dispositif permettant de collecter les résidus et le lubrifiant si bien que ce mélange tombe généralement au sol. Or, ce mélange est relativement difficile à nettoyer en raison notamment de la présence de corps gras.

Aussi, la présente invention vise à pallier les inconvénients de l'art antérieur en proposant un procédé de perçage permettant de collecter de manière efficace les résidus issus du perçage, notamment lorsque ces résidus sont mélangés avec un lubrifiant.

A cet effet, l'invention a pour objet un procédé de perçage selon la revendication 1. La présente invention propose selon la revendication 6 également un dispositif de collecte de résidus issus du perçage, plus particulièrement adapté pour la mise en oeuvre du procédé de l'invention.

D'autres caractéristiques et avantages ressortiront de la description qui va suivre de l'invention, description donnée à titre d'exemple uniquement, en regard des dessins annexés sur lesquels :
- les figures 1A et 1B sont des coupes illustrant de manière schématique la réalisation d'un trou borgne selon une variante du procédé de l'invention respectivement avant et après le perçage,
- les figures 2A et 2B sont des coupes illustrant de manière schématique la réalisation d'un trou débouchant selon une variante du procédé de l'invention respectivement avant et après le perçage,
- les figures 3A et 3B sont des coupes illustrant de manière schématique la réalisation d'un trou débouchant selon une autre variante du procédé de l'invention respectivement avant et après perçage,
- la figure 4 est une coupe illustrant de manière schématique le procédé de réalisation d'un trou débouchant selon une autre variante de l'invention avant le perçage, la figure 3B correspondant à la coupe après perçage,
- les figures 5A à 5D sont des vues en perspective du dispositif en forme de plot selon différentes variantes de l'invention,
- la figure 6 est une vue en perspective du dispositif en forme de plaque selon une variante, et
- les figures 7 à 9 sont des vues en perspective du dispositif sous différentes formes.

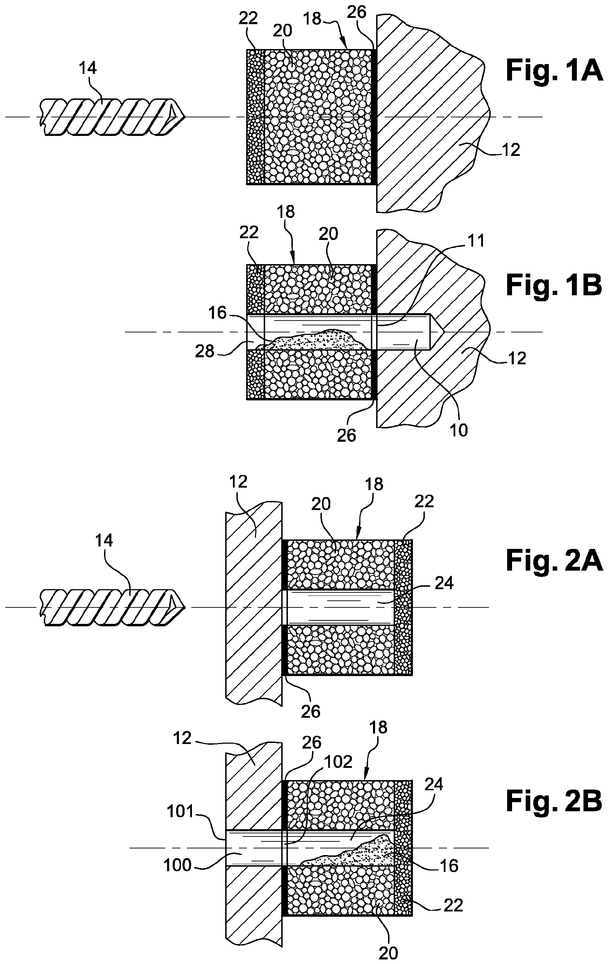

Sur les figures 1A et 1B, on a représenté de manière schématique le procédé de l'invention visant à réaliser un trou borgne 10 dans un élément 12 à l'aide d'un foret 14.

Par foret, on entend pour la suite de la description un outil permettant de réaliser un trou borgne ou débouchant dont les caractéristiques sont choisies par l'homme du métier en fonction notamment du trou à réaliser, de la machine utilisée pour le perçage et du matériau percé.

Le perçage est obtenu grâce à la combinaison d'un mouvement de coupe correspondant à un mouvement de rotation du foret autour de son axe longitudinal et d'un mouvement d'avance correspondant à un mouvement de translation du foret selon son axe longitudinal.

Le mouvement de rotation peut être obtenu par tous moyens, notamment à l'aide d'une machine telle qu'une perceuse par exemple. Il en est de même du mouvement d'avance qui peut être imprimé par un utilisateur dans le cas d'une perceuse.

Le foret n'est pas plus détaillé car il est à la portée de l'homme de l'art et ne constitue pas l'élément essentiel de la présente invention.

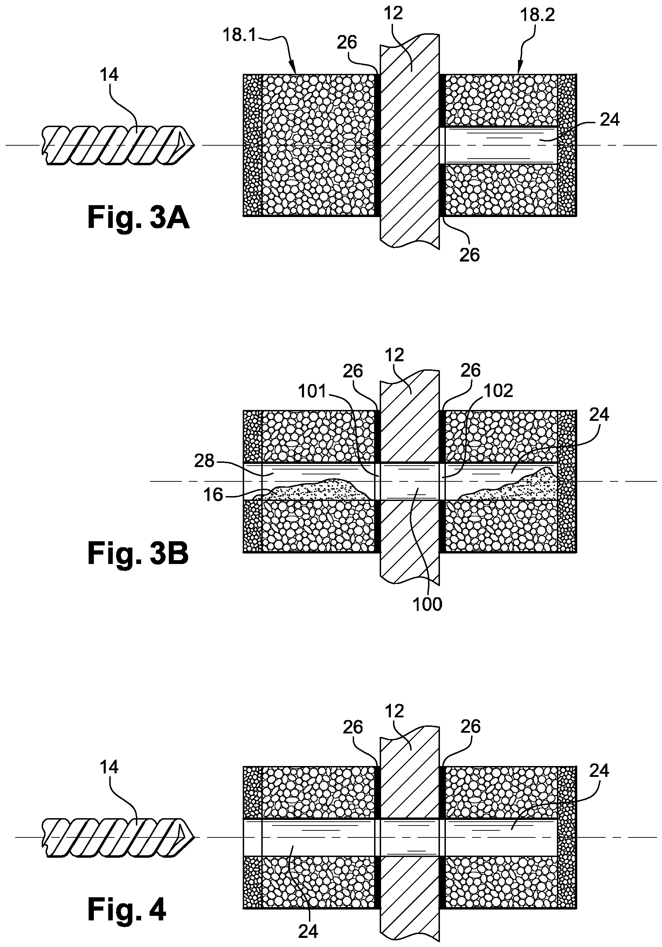

Selon les cas, le foret permet de réaliser un trou 10 au niveau d'une face via une ouverture 11 comme illustré sur la figure 1B ou un trou 100 débouchant de part et d'autre, au niveau de deux faces, via une première ouverture 101 et une seconde ouverture 102, comme illustré sur les figures 2B et 3B.

Lors du perçage, des résidus 16 sont produits. En fonction des applications, les résidus peuvent être appelés copeaux, débris, poussières, déchets ou autres. Selon les applications, les résidus 16 peuvent être mélangés à un liquide, notamment à un lubrifiant utilisé pour lubrifier et/ou pour évacuer les calories. Selon l'invention, préalablement au perçage, au moins un élément en mousse 18 est appliqué contre au moins une face au niveau de laquelle doit déboucher le trou à réaliser.

Selon un mode de réalisation préféré, l'élément en mousse 18 est réalisé à partir d'une mousse polyuréthane ou analogue souple pouvant être associée à des matériaux cellulaires.

Par élément en mousse, on entend un élément solide sous forme d'un bloc en mousse et non un liquide sous forme d'une émulsion également appelée mousse liquide.

Par ailleurs, l'élément en mousse est sec pour favoriser l'absorption des résidus et éventuellement les lubrifiants.

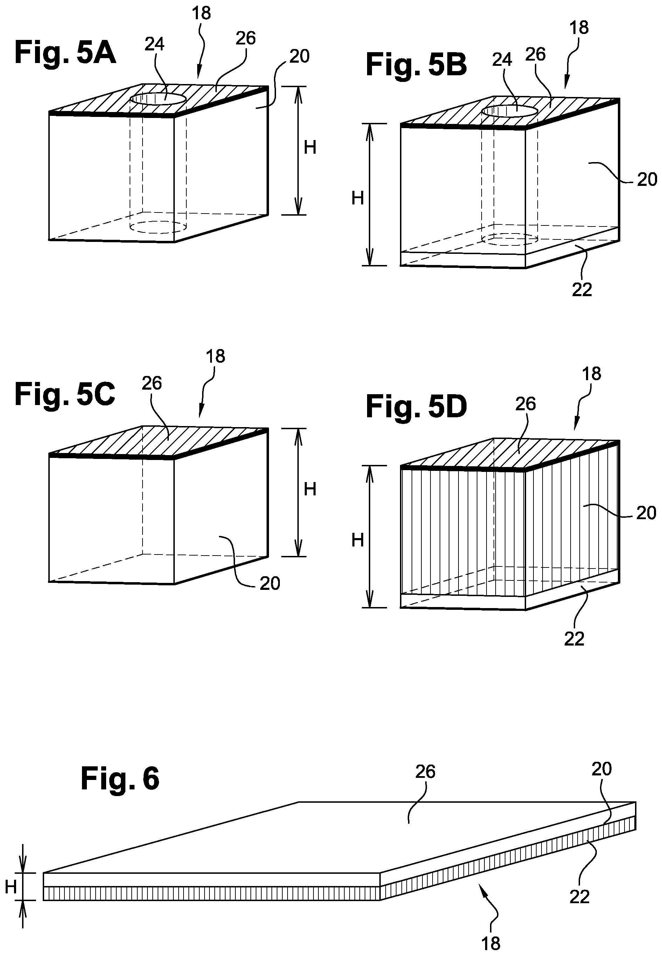

Selon une autre variante, l'élément en mousse peut être associé à au moins une couche en matériau cellulaire ouvert ayant différentes propriétés telles que hydrophile, oléophile et/ou anti-feu, une première couche 20 en matériau absorbant, disposée contre la paroi au niveau de laquelle est réalisé le trou, et une deuxième couche 22 en matériau cellulaire ouvert disposée au niveau de la face opposée à celle plaquée contre la surface de la pièce, comme illustré sur la figure 6.

A titre d'exemple, la première couche 20 en matériau absorbant est réalisée en mousse polyuréthane non traitée.

A titre d'exemple, la deuxième couche 22 en matériau hydrophile est réalisée en mousse polyuréthane traitée pour lui conférer les propriétés requises (hydrophile, oléophile,...).

Selon une variante simplifiée, l'élément en mousse 18 comprend une seule couche de mousse en matériau absorbant, comme illustré sur les figures 5A à 5D. L'épaisseur de l'élément en mousse est notée H sur les figures.

Selon d'autres variantes, on pourrait imaginer un élément en mousse avec plusieurs couches.

Selon les variantes, l'élément en mousse 18 peut comprendre un trou 24 dont le diamètre est adapté à celui du foret comme illustré sur les figures 5A et 5B ou il peut être plein comme illustré sur les figures 5C, 5D et 6 et susceptible d'être percé par le foret.

Selon une autre caractéristique de l'invention, l'élément en mousse 18 peut comprendre au niveau d'au moins une face un revêtement adhésif 26 permettant de le maintenir sur la paroi à percer. Selon les cas, le revêtement adhésif peut être associé à une fonction d'étanchéité. Par ailleurs, il peut permettre un décollement plus ou moins aisé de l'élément de mousse 18 de la surface.

Selon les variantes, ce revêtement 26 peut être repositionnable.

Le fait de prévoir un revêtement adhésif permet de simplifier la mise en oeuvre en plaçant le ou les éléments en mousse 18 sur l'élément 12 indépendamment de l'outil.

Selon les cas, l'élément en mousse peut prendre la forme d'un plot comme illustré sur les figures 5A à 5D avec une section de toutes formes, notamment sensiblement carrée comme illustré sur lesdites figures. Selon une autre variante, l'élément en mousse peut se présenter sous forme de plaque comme illustré sur la figure 6.

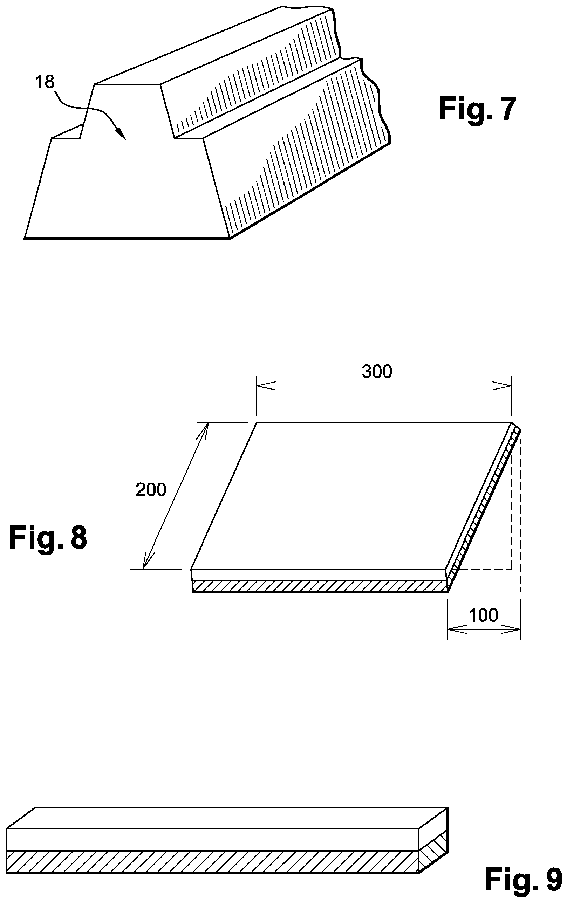

Dans tous les cas, la forme de l'élément en mousse s'adapte aux contraintes liées au poste de perçage et peut avoir différentes formes, simples ou complexes, comme illustré sur les figures 7 à 9. A titre d'exemple, l'élément en mousse peut avoir une section trapézoïdale, comme illustré sur la figure 7. Il peut avoir la forme d'un rectangle biaisé côté droit ou côté gauche comme illustré sur la figure 8 ou une forme de bandeau comme illustré sur la figure 9.

Par ailleurs, les formes de l'élément en mousse peuvent coopérer avec celles de la pièce à percer pour assurer le maintien en place dudit élément en mousse. Ainsi, à titre d'exemple, l'élément en mousse peut avoir une section trapézoïdale susceptible de coopérer avec une rainure en queue d'aronde de la pièce à percer. Selon un premier mode opératoire, illustré par les figures 1A et 1B, pour réaliser un trou borgne, on applique contre la surface de la pièce au niveau de laquelle va déboucher le trou, un élément en mousse 18. Ce dernier est positionné sur la surface de manière à recouvrir la zone au niveau de laquelle va être pratiqué le trou. Comme illustré sur la figure 1A, l'élément en mousse est de préférence plein et ne comprend initialement aucun trou pour permettre le passage du foret. En présence d'un trou pour permettre le passage du foret, ce dernier serait positionné de manière sensiblement ajustée par rapport à la position théorique du trou à réaliser.

De préférence, l'élément en mousse tient seul grâce au revêtement adhésif 26.

Après avoir placé l'élément en mousse 18, l'opération de perçage est réalisée. Le foret perce un trou 28 au niveau de l'élément en mousse et perce en suivant la pièce de manière à réaliser un trou 10. Lors du perçage de la pièce, les résidus 16 sont conservés dans l'élément en mousse. La mousse permet de retenir dans ses alvéoles les résidus et éventuellement d'absorber les liquides tels que le lubrifiant s'ils sont utilisés. Lors du retrait du foret, les parois du trou 28 essuient le foret ce qui permet de retirer les résidus des gorges du foret et de les maintenir dans l'élément en mousse 18. Le choix d'une mousse cellulaire souple permet d'éviter que l'élément en mousse 18 ne s'effiloche.

Après l'opération de perçage, l'élément en mousse 18 est retiré pour être soit jeté ou soit repositionné contre une surface pour la réalisation d'un nouveau trou.

Selon un autre mode opératoire, illustré par les figures 2A et 2B, pour réaliser un trou débouchant 100 de part et d'autre de la pièce 12, on applique au moins un élément en mousse contre l'une des surfaces de la pièce. Comme précédemment, ce dernier est positionné sur la surface de manière à recouvrir la zone au niveau de laquelle va être pratiqué le trou. De préférence, l'élément en mousse 18 est appliqué contre la surface de la pièce opposée à la surface d'attaque du foret. Un gabarit peut être utilisé pour positionner le ou les éléments en mousse 18. Lors du perçage, le foret pousse les résidus et éventuellement le lubrifiant à l'intérieur du trou 24 de l'élément en mousse 18. La mousse permet de maintenir les résidus et le lubrifiant à l'intérieur de l'élément en mousse 18.

Après l'opération de perçage, l'élément en mousse 18 est retiré pour être soit jeté ou soit repositionné contre une surface pour la réalisation d'un nouveau trou.

Selon un autre mode opératoire illustré par les figures 3A et 3B, pour réaliser un trou 100 débouchant de part et d'autre de la pièce 12, on applique deux éléments en mousse, un sur chaque surface de la pièce au niveau desquelles va déboucher le trou. Selon une première variante, on applique un élément en mousse 18.1 de préférence plein contre la surface au niveau de laquelle va pénétrer le foret et un élément en mousse 18.2 de préférence avec un trou 24 contre la surface au niveau de laquelle va sortir le foret. Les éléments en mousse sont positionnés de manière à recouvrir la zone au niveau de laquelle va être pratiqué le trou 100.

Après avoir placé les éléments en mousse 18.1 et 18.2, l'opération de perçage est réalisée. Le foret perce un trou 28 au niveau de l'élément en mousse 18.1 et perce en suivant la pièce de manière à réaliser un trou 100. Lors du perçage les résidus et le lubrifiant sont conservés dans les éléments en mousse, poussés par le foret à l'intérieur du trou 24 ménagé dans l'élément en mousse 18.2 ou maintenus dans l'élément en mousse 18.1 qui tend à essuyer le foret lors de son retrait.

Après l'opération de perçage, les éléments en mousse sont retirés pour être soit jetés ou soit repositionnés contre une surface pour la réalisation d'un nouveau trou.

Selon un autre mode opératoire, illustré par la figure 4, pour réaliser un trou 100 débouchant de part et d'autre de la pièce 12, on applique deux éléments en mousse, un sur chaque surface de la pièce au niveau desquelles va déboucher le trou. Selon cette variante, les deux éléments en mousse comprennent des trous 24 avant perçage.

Selon ces différents modes opératoires, on peut utiliser de manière indifférente au moins un élément en mousse dont la forme est adaptée à l'opération.

Le dispositif de l'invention procure les avantages suivants :
En premier lieu, il permet de protéger les opérateurs lors des phases de perçage en retenant les projections de résidus issus du perçage et le brouillard d'huile généré lorsqu'un lubrifiant est utilisé.

En second lieu, il permet de réduire les salissures et représente un gain significatif de productivité sur l'entretien du poste de travail.

Bien entendu, l'invention n'est évidemment pas limitée au mode de réalisation représenté et décrit ci-dessus, mais en couvre au contraire toutes les variantes, notamment en ce qui concerne les formes et épaisseurs des éléments en mousse, la nature de la mousse ou des mousses utilisée(s), l'utilisation ou non d'un revêtement adhésif.

Enfin, le dispositif de l'invention peut aussi bien être utilisé dans les domaines d'activités industriels tels que par exemple l'aéronautique ou dans le domaine du bricolage pour retenir les résidus ou déchets issus du perçage, avec ou sans lubrifiant.

## Revendications

1. Procédé de perçage visant à réaliser à l'aide d'un outil, notamment un foret, un trou (10, 100) dans une pièce (12) débouchant via au moins une ouverture (11, 101, 102), ledit procédé consistant à appliquer, préalablement au perçage, au moins un élément en mousse solide (18) contre au moins une face au niveau de laquelle doit déboucher le trou (10, 100) à réaliser, ledit élément en mousse solide (18) étant maintenu sur la pièce (12) indépendamment de l'outil, à réaliser le perçage, le procédé étant **caractérisé en ce que**, lors du perçage de la pièce, ledit élément en mousse solide (18) permet de retenir dans ses alvéoles les résidus (16) issus du perçage.

2. Procédé de perçage selon la revendication 1, **caractérisé en ce qu'**il consiste à utiliser un élément en mousse solide (18) comportant un matériau absorbant permettant d'absorber les liquides, tel qu'un lubrifiant, susceptibles d'être utilisés lors du perçage.

3. Procédé de perçage selon la revendication 1 ou 2 visant à obtenir un trou borgne (10) dans une pièce (12) **caractérisé en ce qu'**il consiste à :
- appliquer contre la surface de la pièce au niveau de laquelle va déboucher le trou, un élément en mousse solide (18), ce dernier étant positionné sur la surface de manière à recouvrir la zone au niveau de laquelle va être pratiqué le trou,
- réaliser un trou (28), avec l'outil utilisé pour le perçage, au niveau de l'élément en mousse solide (18) et percer en suivant la pièce (12) de manière à réaliser le trou borgne (10), lors du perçage de la pièce, les résidus (16) étant conservés dans l'élément en mousse solide (18) et lors du retrait de l'outil, les parois du trou (28) essuyant l'outil, et
- retirer l'élément en mousse solide (18).

4. Procédé de perçage selon la revendication 1 ou 2 visant à obtenir un trou débauchant (100) de part et d'autre d'une pièce (12), **caractérisé en ce qu'**il consiste à :
- appliquer un élément en mousse solide (18) contre la surface de la pièce opposée à la surface d'attaque de l'outil, ledit élément en mousse solide (18) étant positionné sur la surface de manière à recouvrir la zone au niveau de laquelle va être pratiqué le trou,
- percer le trou (100), lors du perçage, l'outil poussant les résidus (16), et éventuellement le lubrifiant, à l'intérieur de l'élément en mousse solide (18), et
- retirer l'élément en mousse solide (18).

5. Procédé de perçage selon la revendication 1 ou 2 visant à obtenir un trou débauchant (100) de part et d'autre d'une pièce (12), **caractérisé en ce qu'**il consiste à :
- appliquer deux éléments en mousse solide (18), un sur chaque surface de la pièce au niveau desquelles va déboucher le trou (100), un élément en mousse solide (18.1) de préférence plein contre la surface au niveau de laquelle va pénétrer l'outil et un élément en mousse solide (18.2), de préférence avec un trou (24), contre la surface au niveau de laquelle va sortir l'outil,
- réaliser un trou (28), avec l'outil utilisé pour le perçage, au niveau de l'élément en mousse solide (18.1) et percer en suivant la pièce (12) de manière à réaliser le trou (100), lors du perçage les résidus (16) étant conservés dans les éléments en mousse solide, poussés par le foret à l'intérieur de l'élément en mousse solide (18.2) ou maintenus dans l'élément en mousse solide (18.1) qui tend à essuyer le foret lors de son retrait, et
- retirer les éléments en mousse solide.

6. Dispositif de collecte de résidus issus du perçage, plus particulièrement adapté pour la mise en oeuvre du procédé de perçage selon l'une quelconque des revendications 1 à 5, comprenant au moins un élément en mousse solide (18) susceptible d'être appliqué contre au moins une face d'une pièce (12) au niveau de laquelle doit déboucher le trou (10, 100) à réaliser, ledit élément en mousse solide (18) comprenant des moyens pour le maintenir sur la pièce (12) indépendamment de l'outil, le dispositif **caractérisé en ce que** ledit élément en mousse solide (18) permet de retenir dans ses alvéoles les résidus (16) issus du perçage.

7. Dispositif de collecte de résidus issus du perçage selon la revendication 6, **caractérisé en ce que** l'élément en mousse solide (18) est réalisé à partir d'une mousse polyuréthane ou analogue souple pouvant être associée à des matériaux cellulaires.

8. Dispositif de collecte de résidus issus du perçage selon la revendication 6 ou 7, **caractérisé en ce que** l'élément en mousse solide (18) comprend plusieurs types de mousse, une première couche (20) en matériau absorbant, susceptible d'être disposée contre la paroi au niveau de laquelle est réalisé le trou, et une deuxième couche (22) en matériau hydrophile, oléophile, anti-feu ou autre disposée au niveau de la face opposée à celle plaquée contre la surface de la pièce (12).

9. Dispositif de collecte de résidus issus du perçage selon l'une quelconque des revendications 6 à 8, **caractérisé en ce que** l'élément en mousse solide (18) comprend un revêtement adhésif (26) permettant de le maintenir sur la pièce à percer.

10. Dispositif de collecte de résidus issus du perçage selon l'une quelconque des revendications 6 à 9, **caractérisé en ce que** l'élément en mousse solide (18) se présente sous la forme d'un plot plein ou avec un trou (24).

11. Dispositif de collecte de résidus issus du perçage selon l'une quelconque des revendications 6 à 9, **caractérisé en ce que** l'élément en mousse solide (18) se présente sous la forme d'une plaque avec ou sans trou(s) (24).

## Patentansprüche

1. Bohrverfahren, um mithilfe eines Werkzeugs, insbesondere eines Bohrers, in einem Werkstück (12) ein Loch (10, 100) zu bewerkstelligen, das in wenigstens eine Öffnung (11, 101, 102) mündet, wobei das Verfahren darin besteht, vor dem Bohrvorgang an wenigstens eine Seite, in deren Bereich das zu bewerkstelligende Loch (10, 100) mündet, wenigstens ein Element aus festem Schaum (18) anzusetzen, wobei das Element aus festem Schaum (18) zur Bewerkstelligung der Bohrung unabhängig vom Werkzeug auf dem Werkstück gehalten ist und wobei das Verfahren **dadurch gekennzeichnet ist, dass** das Element aus festem Schaum (18) während des Bohrvorgangs am Werkstück es ermöglicht, in seinen Hohlräumen die Bohrrückstände (16) zurückzuhalten.

2. Bohrverfahren nach Anspruch 1, **dadurch gekennzeichnet, dass** dieses darin besteht, ein Element aus festem Schaum (18) zu verwenden, das ein absorbierendes Material aufweist, das es ermöglicht, Flüssigkeiten, wie ein Schmiermittel, zu absorbieren, die dazu geeignet sind, während des Bohrvorgangs verwendet zu werden.

3. Bohrverfahren nach Anspruch 1 oder 2, um ein Sackloch (10) in einem Werkstück (12) zu erhalten, **dadurch gekennzeichnet, dass** dieses darin besteht:
- Ansetzen eines Elements aus festem Schaum (18) an die Oberfläche des Werkstücks, in deren Bereich das Loch mündet, wobei ersteres auf der Oberfläche derart angeordnet ist, dass die Zone, in deren Bereich das Loch ausgebildet wird, abgedeckt ist,
- Bewerkstelligen eines Lochs (28) mit einem für den Bohrvorgang verwendeten Werkzeug im Bereich des Elements aus festem Schaum und daraufhin Bohren in das Werkstück (12), um auf diese Weise das Sackloch (10) zu bewerkstelligen, wobei während des Bohrvorgangs am Werkstück die Rückstände (16) in dem Element aus festem Schaum (18) aufgehoben werden und die Wände des Lochs (28) beim Zurückziehen des Werkzeugs das Werkzeugs abwischen, und
- Abnehmen des Elements aus festem Schaum (18).

4. Bohrverfahren nach Anspruch 1 oder 2, um ein auf beiden Seiten eines Werkstücks (12) mündendes Loch (100) zu erhalten, **dadurch gekennzeichnet, dass** dieses darin besteht:
- Ansetzen eines Elements aus festem Schaum (18) an die Oberfläche des Werkstücks, die der Bearbeitungsoberfläche des Werkzeugs entgegengesetzt ist, wobei das Element aus festem Schaum (18) auf der Oberfläche derart angeordnet wird, dass die Zone, in deren Bereich das Loch ausgebildet wird, bedeckt wird,
- Bohren des Lochs (100), wobei das Werkzeug während des Bohrvorgangs die Rückstände (16) und unter Umständen das Schmiermittel in das Innere des Elements aus festem Schaum (18) schiebt, und
- Abnehmen des Elements aus festem Schaum (18).

5. Bohrverfahren nach Anspruch 1 oder 2, um ein auf beiden Seiten eines Werkstücks (12) mündendes Loch (100) zu erhalten, **dadurch gekennzeichnet, dass** dieses darin besteht:
- Ansetzen von zwei Elementen aus festem Schaum (18) auf jeder Oberfläche des Werkstücks, in deren Bereich das Loch (100) mündet, ein Element aus festem Schaum (18.1), vorzugsweise aus Vollmaterial, gegen die Oberfläche, in deren Bereich das Werkzeug eindringt, und ein Element aus festem Schaum (18.2), vorzugsweise mit einem Loch (24), gegen die Oberfläche, in deren Bereich das Werkzeugs heraustritt,
- Bewerkstelligen eines Lochs (28) mit einem für den Bohrvorgang verwendeten Werkzeug im Bereich des Elements aus festem Schaum (18.1) und daraufhin Durchbohren des Werkstücks (12), um auf diese Weise das Loch (100) zu bewerkstelligen, wobei während des Bohrvorgangs die Rückstände (16) in den Elementen aus festem Schaum aufgehoben werden, indem sie durch den Bohrer in das Innere des Elements aus festem Schaum (18.2) geschoben werden oder indem diese in dem Element aus festem Schaum (18.1) gehalten werden, das dazu neigt, den Bohrer bei dessen Zurückziehen abzuwischen, und
- Abnehmen der Elemente aus festem Schaum.

6. Vorrichtung für die Aufnahme von Bohrrückständen, die insbesondere zur Durchführung des Bohrverfahrens nach einem der Ansprüche 1 bis 5 eingerichtet ist, mit wenigstens einem Element aus festem Schaum (18), das sich dazu eignet, an wenigstens eine Seite eines Werkstücks (12) angesetzt zu werden, in deren Bereich das zu bewerkstelligende Loch (10, 100) münden muss, wobei das Element aus festem Schaum (18) Mittel umfasst, um dieses auf dem Werkstück (12) unabhängig vom Werkzeug zu halten, und wobei die Vorrichtung **dadurch gekennzeichnet ist, dass** das Element aus festem Schaum (18) es ermöglicht, in seinen Hohlräumen die Bohrrückstände (16) zurückzuhalten.

7. Vorrichtung zur Aufnahme von Bohrrückständen nach Anspruch 6, **dadurch gekennzeichnet, dass** das Element aus festem Schaum (18) auf der Grundlage eines Polyurethanschaums oder eines analogen weichen Schaums hergestellt wird, der den Zellmaterialien zugeordnet ist.

8. Vorrichtung zur Aufnahme von Bohrrückständen nach Anspruch 6 oder 7, **dadurch gekennzeichnet, dass** das Element aus festem Schaum (18) mehrere Arten von Schaum umfasst, eine erste Schicht (20) aus einem absorbierenden Material, das dazu geeignet ist, an einer Wand, in deren Bereich das Loch bewerkstelligt wird, angeordnet zu werden, und eine zweite Schicht (22) aus hydrophilem, oleophilem oder feuerfestem oder anderem Material, das im Bereich der Seite angeordnet wird, die der an die Oberfläche des Werkstücks (12) angesetzten Seite entgegengesetzt ist.

9. Vorrichtung zur Aufnahme von Bohrrückständen nach einem der Ansprüche 6 bis 8, **dadurch gekennzeichnet, dass** das Element aus festem Schaum (18) eine adhäsive Beschichtung (26) aufweist, die es gestattet, dieses auf dem zu bohrenden Werkstück zu halten.

10. Vorrichtung zur Aufnahme von Bohrrückständen nach einem der Ansprüche 6 bis 9, **dadurch gekennzeichnet, dass** das Element aus festem Schaum (18) in der Gestalt eines Klotzes aus Vollmaterial oder mit einem Loch (24) vorliegt.

11. Vorrichtung zur Aufnahme von Bohrrückständen nach einem der Ansprüche 6 bis 9, **dadurch gekennzeichnet, dass** das Element aus festem Schaum (18) in der Gestalt einer Platte mit oder ohne Loch(Löcher) (24) vorliegt.

## Claims

1. A drilling method aimed at producing, by means of a tool, in particular a drill bit, a hole (10, 100) in a part (12) emerging via at least one opening (11, 101, 102), said method comprising applying, prior to the drilling, at least one solid foam element (18) against at least one face at which the hole (10, 100) to be produced is to emerge, said solid foam element (18) being held on the part (12) independently of the tool that is to carry out the drilling, the method being **characterised in that**, during the drilling of the part, said solid foam element (18) makes it possible to retain in its alveoli the residues (16) issuing from the drilling.

2. A drilling method according to claim 1, **characterised in that** it consists of using a solid foam element (18) comprising an absorbent material for absorbing liquid, such as a lubricant, liable to be used during the drilling.

3. A drilling method according to claim 1 or 2, aimed at obtaining a blind hole (10) in a part (12), **characterised in that** it comprises:
- applying, against the surface of the part at which the hole is to emerge, a solid foam element (18), the latter being positioned on the surface so as to cover the area at which the hole is to be formed,
- producing a hole (28), with the tool used for the drilling, at the solid foam element (18) and drilling while following the part (12) so as to produce the blind hole (10), during the drilling of the part, the residues (16) being preserved in the solid foam element (18) and, when the tool is withdrawn, the walls of the hole (28) wiping the tool, and
- removing the solid foam element (18).

4. A drilling method according to claim 1 or 2, aimed at obtaining a hole (100) emerging on both sides of a part (12), **characterised in that** it comprises:
- applying a solid foam element (18) against the surface of the part opposite to the surface attacked by the tool, said solid foam element (18) being positioned on the surface so as to cover the area at which the hole will be formed,
- drilling the hole (100), during the drilling the tool pushing the residues (16), and if applicable the lubricant, inside the solid foam element (18), and
- removing the solid foam element (18).

5. A drilling method according to claim 1 or 2, aimed at obtaining a hole (100) emerging on both sides of a part (12), **characterised in that** it comprises:
- applying two solid foam elements (18), one on each surface of the part at which the hole (100) will emerge, a preferably full solid foam element (18.1) against the surface at which the tool will penetrate and a solid foam element (18.2), preferably with a hole (24), against the surface at which the tool will emerge,
- producing a hole (28), with the tool used for the drilling, at the solid foam element (18.1) and drilling while following the part (12) so as to produce the hole (100), during the drilling the residues (16) being preserved in the solid foam elements, pushed by the drill bit inside the solid foam element (18.2) or kept in the solid foam element (18.1), which tends to wipe the drill bit as it is withdrawn, and
- removing the solid foam elements.

6. A device for collecting residues resulting from drilling, more particularly suitable for implementing the drilling method according to any of claims 1 to 5, comprising at least one solid foam element (18) able to be applied against at least one face of a part (12) at which the hole (10, 100) to be produced is to emerge, said solid foam element (18) comprising means for holding it on the part (12) independently of the tool, the device being **characterised in that** said solid foam element (18) makes it possible to retain, in its alveoli, the residues (16) issuing from the drilling.

7. A device for collecting residues issuing from drilling according to claim 6, **characterised in that** the solid foam element (18) is produced from a flexible polyurethane foam or the like that can be associated with cellular materials.

8. A device for collecting residues issuing from drilling according to claim 6 or 7, **characterised in that** the solid foam element (18) comprises a plurality of types of foam, a first layer (20) made from absorbent material, able to be disposed against the wall at which the hole is produced, and a second layer (22) of hydrophilic, oleophilic, fire-resistant or other material disposed at the face opposite to the one pressed against the surface of the part (12).

9. A device for collecting residues issuing from drilling according to any of claims 6 to 8, **characterised in that** the solid foam element (18) comprises an adhesive coating (26) for holding it on the part to be drilled.

10. A device for collecting residues issuing from drilling according to any of claims 6 to 9, **characterised in that** the solid foam element (18) is in the form of a pad that is full or with a hole (24).

11. A device for collecting residues issuing from drilling according to any of claims 6 to 9, **characterised in that** the solid foam element (18) is in the form of a sheet with or without a hole or holes (24).
